# FASCICULE DE BREVET EUROPEEN

(11) **EP 2 961 653 B1**
(45) Date de publication et mention de la délivrance du brevet: **29.03.2023**
(21) Numéro de dépôt: 14713192.4
(22) Date de dépôt: 27.02.2014
(51) Int. Cl.: B64C 11/30, F01D 7/00

(54) **AUBAGE À CALAGE VARIABLE**
BESCHAUFELUNG MIT BLATTVERSTELLUNG
VARIABLE-PITCH BLADE ASSEMBLY

(30) Priorité: 01.03.2013 FR 1351848
(43) Date de publication de la demande: 06.01.2016
(73) Titulaire: Safran Aircraft Engines, 75015 Paris (FR)
(72) Inventeur: FABRE, Adrien, F-77550 Moissy-Cramayel Cedex (FR); LAURENCEAU, Adrien, F-77550 Moissy-Cramayel Cedex (FR); VLASTUIN, Jonathan, F-77550 Moissy-Cramayel Cedex (FR)
(74) Mandataire: Regimbeau
(86) Numéro de dépôt international: PCT/FR2014/050433
(87) Numéro de publication internationale: WO 2014/132002

(56) Documents cités:
- DE-A1-102007 028 142
- GB-A- 1 251 955
- US-A- 4 767 270
- US-A- 5 154 580
- US-A1- 2013 011 259

## Description

### Domaine de l'invention

L'invention concerne un aubage à calages variables, ainsi qu'une turbomachine comprenant un tel aubage.

### Etat de l'art

Les aubages de turbomachine comprenant au moins un rotor et des pales à calage géométrique variable sont connues de l'état de la technique.

Le document US 4767 270 A décrit un aubage à calages variables.

Le document DE102007028142 décrit une hélice à pas variable ayant une ou plusieurs pales d'hélice montées sur un moyeu d'hélice autour d'un axe de déplacement radial de manière réglable. Les pales de l'hélice sont reliées au moyeu de l'hélice par un élément de liaison guidant le forage et supportant la force de traction. Un calage de la pale de l'hélice est prévu entre la pale de l'hélice et le moyeu de l'hélice dans une direction circulaire ou dans la direction de la poussée permettant l'agencement des joints.

Certaines turbomachines sont du type à soufflante non carénée (en anglais « open rotor » ou « unducted fan »). La soufflante d'une turbomachine de ce type comprend typiquement deux hélices externes coaxiales et contrarotatives appartenant à deux aubages, respectivement amont et aval, qui sont chacune entraînées en rotation et qui s'étendent sensiblement radialement à l'extérieur de la nacelle de cette turbomachine.

Chaque hélice comprend une pluralité de pales entraînées en rotation par le rotor autour de l'axe de la turbomachine ou axe de l'hélice.

Le calage géométrique est l'angle formé par la corde du profil de la pale et le plan de rotation de l'hélice, défini comme le plan orthogonal à l'axe de rotation de l'hélice de l'aubage.

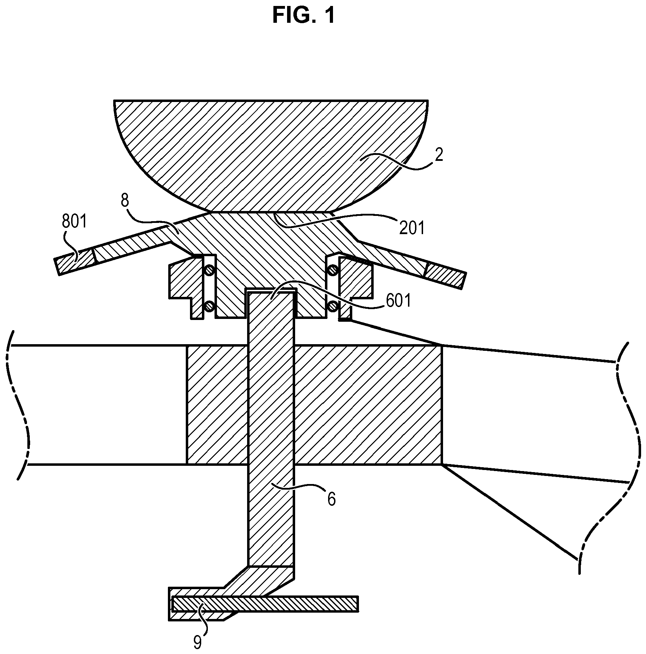

A cet effet, comme illustré sur la Figure 1, on connaît un rotor comprenant un arbre 6 radial dont une tête 601 est liée à la pale 2 par un pivot 8 dans lequel un pied de la pale 201 est logé.

La rotation de l'arbre 6 radial peut être commandée par le déplacement axial d'une biellette 9. Un vérin (non représenté) peut commander le déplacement axial des biellettes 9, et ainsi de régler de manière uniforme le calage de l'ensemble des pales 2.

En l'absence de commande par le vérin, suite par exemple à une panne de l'unité pilotant le vérin ou à une panne du vérin, les pales 2 ont tendance, en raison de leur inertie, à adopter un calage à 0° par rapport au plan de rotation de l'hélice, c'est-à-dire que la corde du profil de la pale 2 est orthogonale au flux aérodynamique.

Ce calage a pour inconvénient de générer beaucoup de traînée, rendant l'avion difficilement contrôlable, notamment en phase de décollage.

Par conséquent, les dispositifs de commande du calage des pales 2 comprennent classiquement un mécanisme permettant de ramener les pales 2 vers une position dans laquelle la corde du profil de la pale 2 est orthogonale au plan de rotation de l'hélice. Cette position est dénommée « drapeau » par l'homme du métier. Un tel mécanisme comprend par exemple des contrepoids 801 afin de contrer directement l'inertie des pales 2.

La position drapeau a pour avantage de générer une faible traînée, et un faible couple en « windmilling » (terminologie anglo-saxonne utilisée par l'homme du métier pour désigner un mode de fonctionnement dans lequel le moteur est arrêté et l'hélice est entraînée en rotation par le vent relatif).

Cependant, un tel mécanisme présente une masse élevée. A titre d'exemple, dans des soufflantes à hélices non carénées, la masse du contrepoids 801 de chaque pale 2 représente environ 50% de la masse d'une pale 2. La masse totale de ces contrepoids est typiquement d'environ 100kg par moteur.

De plus, les structures tournantes de l'hélice ou soufflante subissent la charge centrifuge de ces contrepoids.

### Présentation générale de l'invention

Afin de pallier les inconvénients de l'état de la technique, l'invention propose un aubage à calages variables selon la revendication 1.

L'invention est avantageusement complétée par les caractéristiques suivantes, prises seules ou en une quelconque de leurs combinaisons techniquement possibles :
- l'inclinaison de pale comprend une composante d'inclinaison vers l'amont ou vers l'aval par rapport au plan de l'hélice ;
- l'angle de inclinaison vers l'amont est compris entre 0 et 2° ;
- chaque arbre est incliné par rapport à l'axe radial, inclinant la pale correspondante selon l'inclinaison de pale ;
- l'axe de rotation de pale est incliné de manière fixe par rapport à l'axe radial ;
- la composante d'inclinaison vers l'amont ou vers l'aval est fixe par rapport à l'axe radial ;
- l'angle d'inclinaison tangentielle et l'angle d'inclinaison vers l'amont sont déterminés au cours de la conception, et sont donc figés par la construction du dispositif ;
- chaque arbre présente une articulation inclinant la tête de l'arbre par rapport au reste de l'arbre, et inclinant ainsi la pale correspondante selon l'inclinaison de pale ;
- l'articulation comprend un soufflet ;
- l'articulation comprend un joint de cardan.

L'invention concerne également une turbomachine comprenant un tel aubage.

L'invention concerne également une turbomachine comprenant deux tels aubages, les deux aubages étant des aubages contrarotatifs.

### Brève description des figures

D'autres caractéristiques et avantages de l'invention apparaitront lors de la description ci-après d'un mode de réalisation. Aux dessins annexés :
- la figure 1 est une représentation partielle d'un aubage de l'art antérieur ;
- la figure 2 est une représentation partielle d'une turbomachine sur laquelle l'aubage est apte à être intégré ;
- la figure 3a est une représentation schématique d'une inclinaison de pale tangentielle dans le plan de l'hélice d'un aubage ;
- la figure 3b est une représentation graphique de l'évolution du moment de rappel en fonction du calage pour différentes valeurs d'inclinaison de pale tangentielle ;
- la figure 4a est une représentation graphique de la hauteur de pale en fonction de la flèche du bord d'attaque au quart de la corde en tête de la pale, la flèche étant exprimée en degrés et la hauteur en rapport du rayon extérieur (égal à 0 sur l'axe moteur et égal à 1 en sommet de pale), pour différentes valeurs de composante d'inclinaison de bascule amont-aval ;
- la figure 4b est une représentation graphique de la hauteur de pale en fonction de la flèche du bord d'attaque au quart de la corde en tête de la pale, la flèche étant exprimée en degrés et la hauteur en rapport du rayon extérieur, pour différentes valeurs de composante d'inclinaison de bascule tangentielle ;
- la figure 5a est une représentation graphique de la hauteur de pale en fonction de la fermeture de la pale, la fermeture étant exprimée en degrés et la hauteur en rapport du rayon extérieur, pour différentes valeurs de composante d'inclinaison de bascule amont-aval ;
- la figure 5b est une représentation graphique de la hauteur de pale en fonction de la fermeture de la pale, la fermeture étant exprimée en degrés et la hauteur en rapport du rayon extérieur, pour différentes valeurs de composante d'inclinaison tangentielle ;
- la figure 5c est une représentation graphique de la hauteur de pale en fonction de la fermeture de la pale, la fermeture étant exprimée en degrés et la hauteur en rapport du rayon extérieur, pour une inclinaison de pale comprenant une composante d'inclinaison vers l'amont et une composante d'inclinaison tangentielle ;
- la figure 6 représente un détail d'un aubage comprenant un arbre de liaison incliné selon un exemple de mode de réalisation de l'invention ;
- la figure 7 représente un détail d'un aubage comprenant un soufflet selon un autre exemple de mode de réalisation de l'invention ;
- la figure 8 représente un détail d'un aubage comprenant un joint de cardan selon encore un autre exemple de mode de réalisation de l'invention.

### Description détaillée de l'invention

### Turbomachine

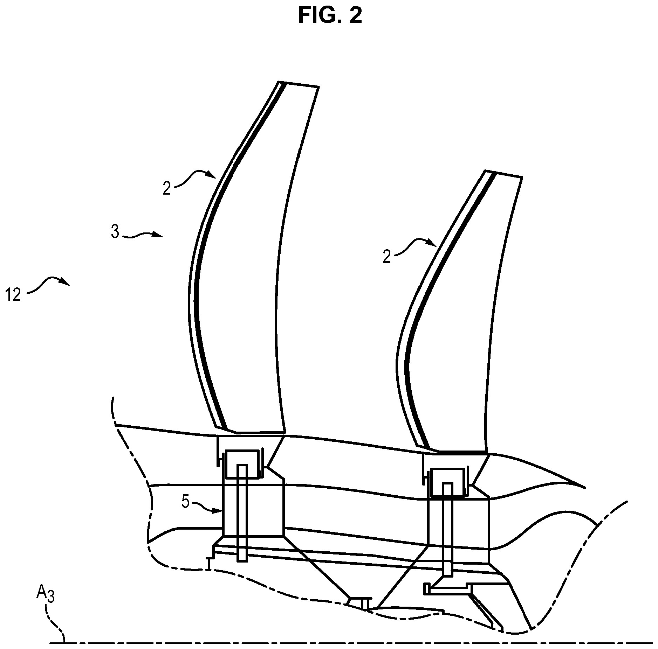

En référence à la Figure 2, on a représenté une portion de turbomachine 12 comprenant une soufflante 3, dans laquelle les aubes ou pales 2 appartiennent à deux hélices contrarotatives. Il s'agit par exemple d'une turbomachine de type à soufflante non carénée (en anglais « *open rotor* » ou « *unducted fan* »).

De manière classique, un flux d'air qui pénètre dans la turbomachine 12 est comprimé puis est mélangé à du carburant et brûlé dans une chambre de combustion, les gaz de combustion permettant d'entraîner en rotation le rotor 5.

Le rotor 5 présente alors un mouvement de rotation autour d'un axe A₃ longitudinal de la soufflante 3, qui est transmis aux aubes 2, pour leur mise en rotation autour d'un axe A₃ longitudinal.

### Aubage

### Calage variable

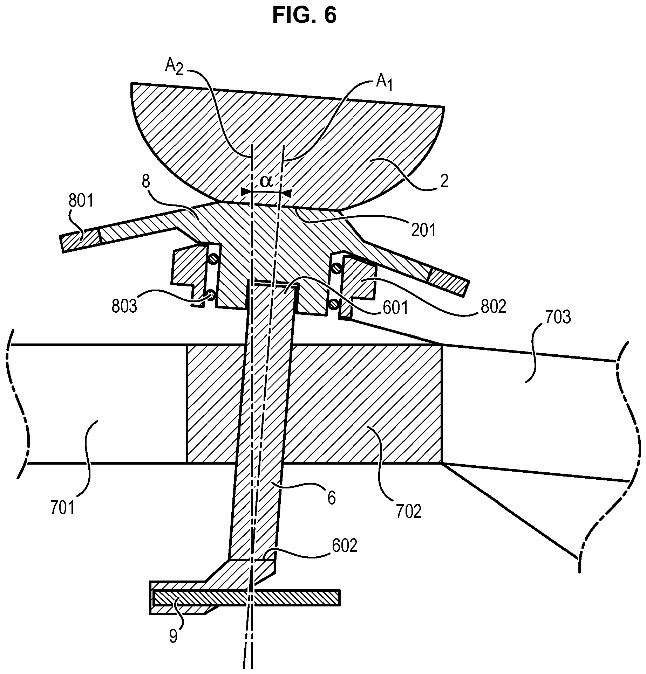

En référence aux figures 6 à 8, sont décrits des aubages 1 de pales 2 selon l'invention.

Comme énoncé précédemment, le calage géométrique est l'angle formé par la corde du profil d'une pale 2 et le plan de rotation de l'hélice 4 correspondante. Par la suite, on emploiera uniquement le terme « calage », comme cela est couramment utilisé dans l'état de la technique.

On note que le calage est une valeur algébrique. Par exemple, un calage à -90° correspond à un calage pour lequel le bord d'attaque de la pale 2 est situé vers l'arrière.

Le calage des pales 2 de l'hélice est adapté en fonction des conditions de vol : par exemple, au sol, le calage est proche de 10°, au décollage, entre 35° et 45°, et en montée, entre 45° et 60°. En croisière, le calage est proche de 65°.

Le calage à 90° est classiquement dénommé position « drapeau » ou en anglais « feather » par l'homme du métier, le calage à 0°, position « à plat », et le calage à -30°, position « reverse » (cette position permet de freiner l'aéronef).

L'aubage 1 comprend une pluralité de pales 2 d'un aubage. Chaque pale 2 est à calage variable selon un axe de rotation A₁ de pale. Chaque pale 2 présente un pied 201.

L'aubage 1 comprend une pluralité d'arbres 6 de liaison de rotor. Chaque arbre 6 de liaison est adapté pour que sa rotation modifie le calage d'une des pales 2. Chaque arbre 6 de liaison présente un pied 602 et une tête 601. Les arbres 6 sont par exemple disposés au niveau d'un bras de carter tournant 702, entre une veine venant de la turbine 701 et une veine dirigée vers la tuyère 703.

De manière classique, la pale 2 est liée à l'arbre 6 de liaison correspondant par un pivot 8 dédié de manière à permettre la rotation de chaque pale 2 selon l'axe de rotation A₁ de pale 2. Le pivot 8 peut comprendre des contrepoids 801. Ainsi le pied 201 de la pale 2 peut être logé dans le pivot 8. Les pivots 8 sont par exemple montés dans un anneau 802 axisymétrique présentant une pluralité de logements radiaux sensiblement cylindriques, cet anneau 802 étant couramment dénommé anneau polygonal. Des roulements 803 disposés entre l'anneau polygonal 802 et le pivot 8 permettent de conserver un degré de liberté de rotation du pivot 8 par rapport à l'anneau polygonal 802.

Le dispositif comprend en outre des pièces aptes à être déplacées conjointement selon une direction axiale de sorte à entraîner la rotation de l'arbre 6 de liaison. Les pièces comprennent en général une biellette 9, dont une extrémité est liée à l'arbre 6 de liaison. Chaque biellette 9 est liée à un arbre 6 de liaison d'une pale 2.

Le dispositif 1 peut comprendre en outre au moins un vérin (non représenté) commandant le déplacement de la biellette 9 selon la direction axiale.

Le calage de la pale 2 peut être modifié par l'extension axiale de la tige du vérin, qui agit sur la biellette 9 en translation axiale.

### Inclinaison de pale

Chaque pale 2 présente une inclinaison de pale, chaque axe de rotation de pale A₁ étant incliné par rapport à un axe radial A₂, l'axe radial A₂ passant par le pied 602 de l'arbre 6 correspondant.

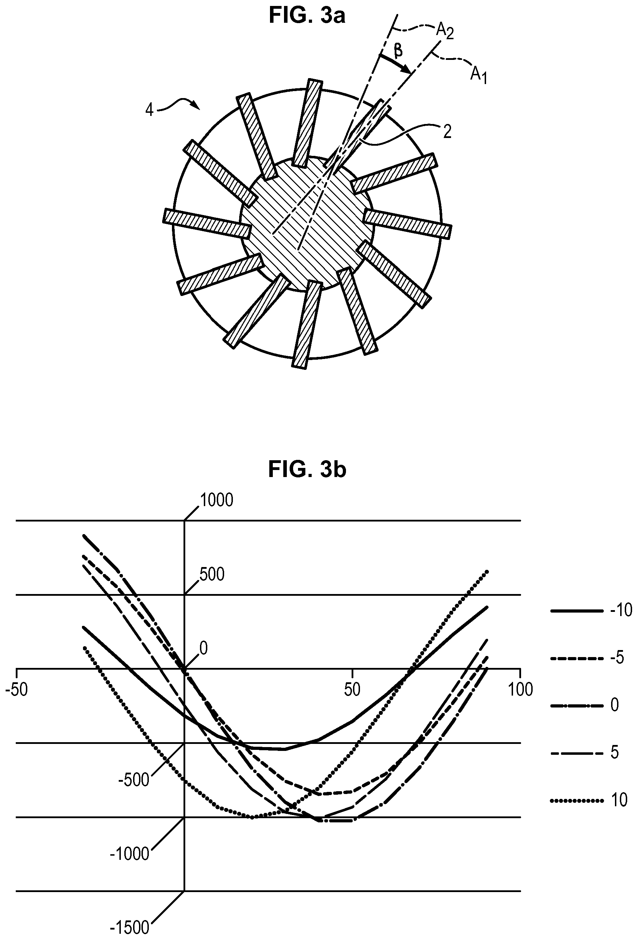

Comme illustré à la figure 3a, l'inclinaison de pale comprend une composante d'inclinaison tangentielle β dans le plan de l'hélice. De cette manière, le centre de gravité de la pale 2 se retrouve notablement excentré par rapport à l'axe radial A₂ correspondant et par rapport à l'axe de l'hélice A₃. Le moment de rappel sous effort centrifuge d'une pale 2 d'un aubage selon l'art antérieur ne comprend que le produit d'inertie. Suite à l'inclinaison de la pale 2, le moment de rappel comprend plusieurs termes en combinaison linéaire, faisant intervenir la composante d'inclinaison tangentielle β et une composante d'inclinaison vers l'amont ou vers l'aval α, et dépend désormais de la masse et de la position du centre de gravité de la pale 2. Il est ainsi possible d'améliorer les performances mécaniques des pales 2 et donc de l'aubage en inclinant tangentiellement les pales 2. Il est par exemple possible d'installer un contrepoids 801 plus efficace car le rayon de son centre de gravité, c'est-à-dire la distance de son centre de gravité à l'axe moteur autour duquel est entraîné l'aubage, variera en fonction du calage.

Par convention, on considérera α positif pour une bascule amont-aval vers l'amont et β positif pour une bascule tangentielle dans le sens défini par la rotation de l'hélice, c'est-à-dire vers l'intrados.

Ainsi la figure 3b représente l'évolution du moment de rappel en fonction du calage pour différentes valeurs d'inclinaison de pale purement tangentielle β. Pour une absence d'inclinaison de pale, on observe bien une position d'équilibre stable à 0° et une position d'équilibre instable à 90°, l'extremum négatif étant situé à environ 45°. On observe qu'un angle d'inclinaison tangentielle de -10° par rapport au sens défini par la rotation de l'hélice, anti-horaire sur la figure 3b, permet de diminuer par deux environ la valeur absolue de l'extremum négatif du moment de rappel de la pale.

Les performances mécaniques peuvent également être améliorées par une inclinaison de pale comprenant une composante d'inclinaison vers l'amont ou vers l'aval α par rapport au plan de l'hélice.

Par ailleurs, les aubages sont amenés à fonctionner dans des conditions aérodynamiques variées selon les points de vol tels que le décollage, la montée ou la croisière. Il est connu que ces différents points de vol impliquent des géométries d'aubage différentes.

La variation de calage par rotation de la pale 2 uniquement selon l'axe de rotation A₁ comme décrit dans l'art antérieur limite les possibilités de compromis sur une géométrie de l'aubage adaptée pour les différents points de vol.

L'introduction d'une inclinaison de pale permet également d'améliorer les performances aérodynamiques de l'aubage. L'inclinaison de pale permet d'améliorer des variations de calage entre le pied 201 de la pale et une tête de la pale 2.

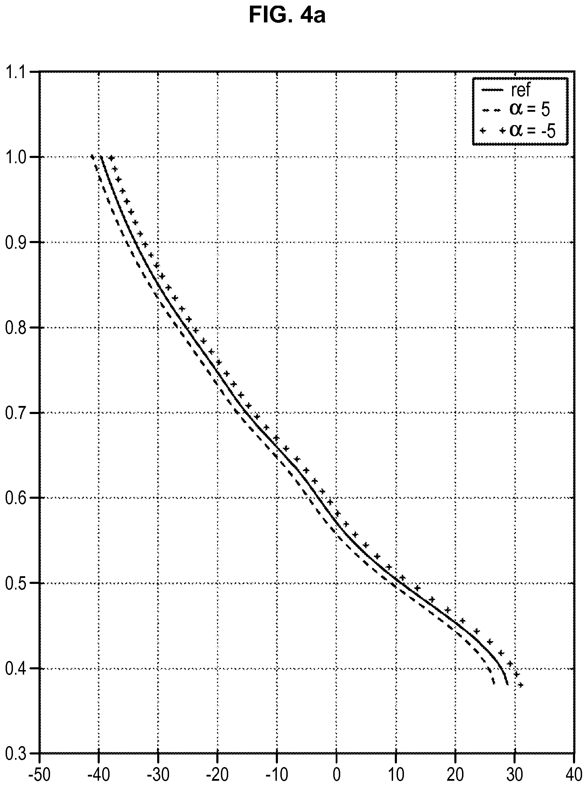

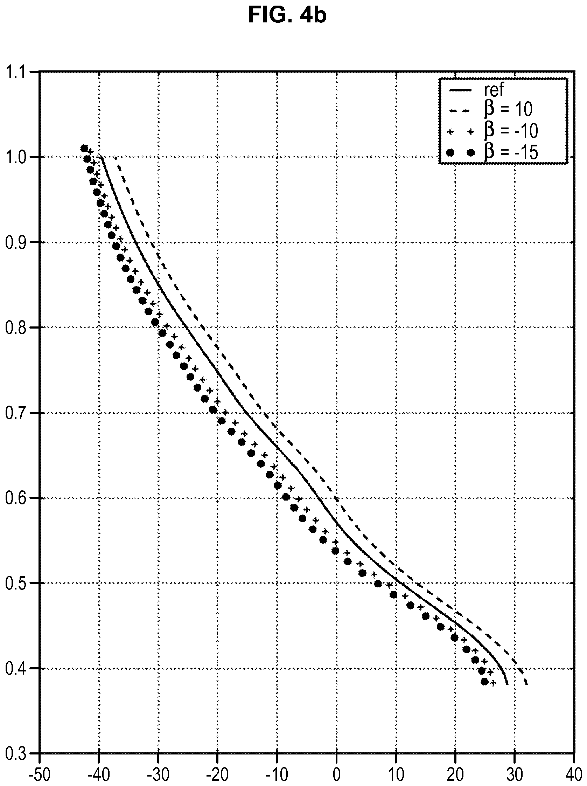

Par exemple, en référence aux figures 4a et 4b, l'inclinaison de pale permet de faire varier la flèche de la pale en fonction des points de vol. La figure 4a représente la hauteur de pale en fonction de la flèche du bord d'attaque au quart de la corde en tête de la pale, lors du passage du point de dessin correspondant à la fin de montée (« MaxClimb » en terminologie anglo-saxonne) au point de décollage (TakeOff en terminologie anglo-saxonne), la flèche étant exprimée en degrés et la hauteur en rapport du rayon extérieur, pour différentes valeurs de composante d'inclinaison de bascule amont-aval α. Pour α = -5°, une flèche supplémentaire de 2° est observée.

La figure 4b représente la hauteur de pale en fonction de la flèche du bord d'attaque au quart de la corde en tête de la pale, lors du passage du point de dessin correspondant à la fin de montée (« MaxClimb » en terminologie anglo-saxonne) au point de décollage (TakeOff en terminologie anglo-saxonne), la flèche étant exprimée en degrés et la hauteur en rapport du rayon extérieur, pour différentes valeurs de composante d'inclinaison de bascule tangentielle β ou inclinaison extrados-intrados. On s'aperçoit qu'une composante d'inclinaison de bascule tangentielle β de -10° permet une flèche supplémentaire de 2°.

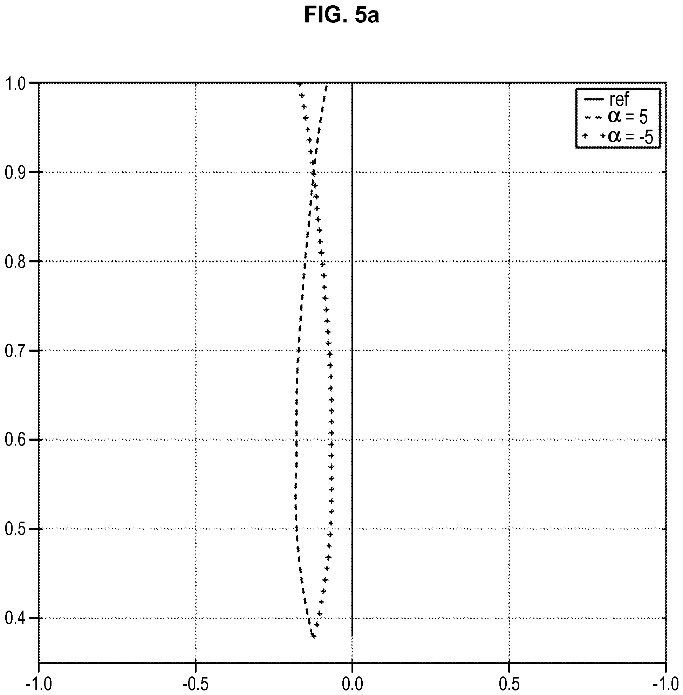

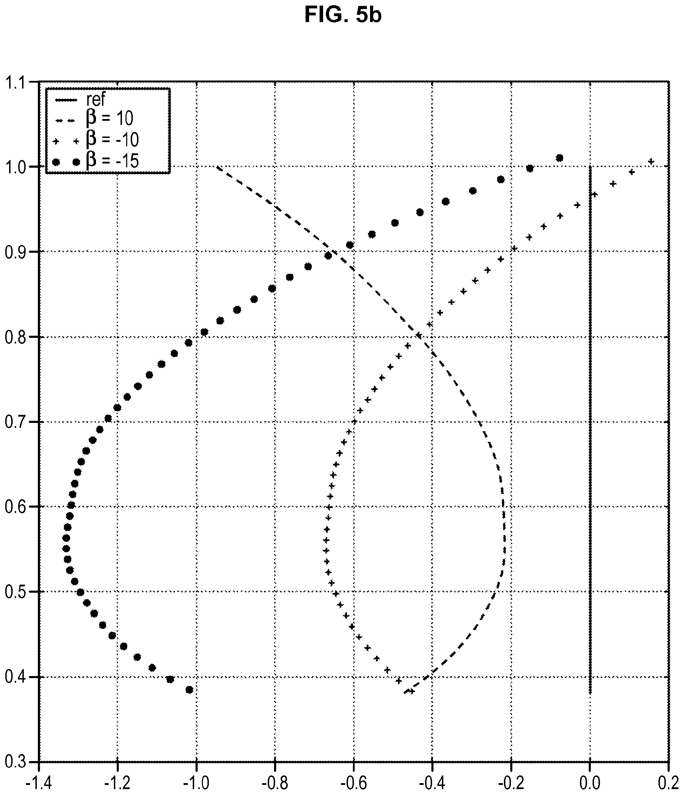

Par exemple, en référence aux figures 5a et 5b, l'inclinaison de pale permet de faire varier la fermeture sur l'envergure de la pale en fonction des points de vol. La figure 5a représente la hauteur de pale en fonction de la fermeture de la pale, lors du passage du point de dessin correspondant à la fin de montée (« MaxClimb » en terminologie anglo-saxonne) au point de décollage (TakeOff en terminologie anglo-saxonne), la fermeture étant exprimée en degrés et la hauteur en rapport du rayon extérieur, pour différentes valeurs de composante d'inclinaison de bascule amont-aval α. On remarque une augmentation de la fermeture en tête au point de décollage avec α positif. En particulier, pour α = 5°, on constate une surfermeture de 0,1°.

La figure 5b représente la hauteur de pale en fonction de la fermeture de la pale, lors du passage du point de dessin correspondant à la fin de montée (« MaxClimb » en terminologie anglo-saxonne) au point de décollage (TakeOff en terminologie anglo-saxonne), la fermeture étant exprimée en degrés et la hauteur en rapport du rayon extérieur, pour différentes valeurs de composante d'inclinaison tangentielle β ou inclinaison de bascule extrados-intrados. On remarque une augmentation de la fermeture en tête au point de décollage avec β négatif. En particulier, pour β = -10°, on constate une surfermeture de 0,5°.

L'inclinaison de pale permet ainsi d'accentuer les différences entre le pied et la tête de la pale, par exemple en augmentant la fermeture au niveau de la tête en conservant la fermeture au niveau du ventre ou milieu de la pale, ce qui repousse la limite de décrochage en tête de pale au décollage et favorise la stabilité de l'aubage ainsi que ses performances acoustiques. L'inclinaison de pale permet ainsi de modifier des paramètres de vrillage apparent.

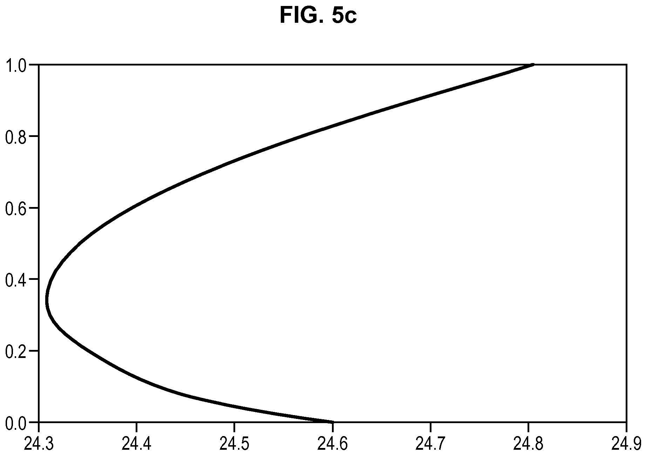

Dans le cadre d'un procédé -de conception aérodynamique d'un aubage à calage variable, on recherche ainsi une surfermeture en tête au point de décollage par rapport au point de montée maximale, de sorte à réduire les incidences en tête au point de décollage. Il s'agit ainsi ici d'améliorer des conditions acoustiques, par exemple par une limitation des décollements et/ou de la génération de tourbillons, ou encore par la réduction de la charge aérodynamique. Une telle surfermeture est recherchée en modifiant les paramètres β et α, en particulier dans le cas où β est négatif et α est positif. L'évolution liée à l'inclinaison tangentielle β est considérée en priorité car son effet est supérieur à celui de l'inclinaison vers l'amont ou vers l'aval α.En référence à la figure 5c, représentant la hauteur de la pale en fonction de la fermeture de la pale, la fermeture étant exprimée en degrés et la hauteur en rapport du rayon extérieur, pour une inclinaison de pale constituée d'une composante d'inclinaison vers l'amont α présentant un angle de 0,9° et une composante d'inclinaison tangentielle β présentant un angle de -10°, une sur-fermeture en tête de 0,5° est observée, ainsi qu'une augmentation de flèche de l'ordre de 2° environ. Il est ainsi possible de repousser la limite de décrochage en phase de décollage.

Une telle augmentation de fermeture implique certes une diminution de 1,5% de la portance, mais permet également une diminution de 3% de la trainée. Par ailleurs, l'augmentation de la flèche implique une diminution de 2,5% de la portance mais permet une diminution de 5% de la trainée. Ainsi une telle inclinaison de pale permet une diminution de la trainée de 8% pour une diminution de la portance de 4%. La trainée est ainsi réduite plus fortement que la portance, ce qui permet d'améliorer le rendement de l'aubage.

L'effet d'une telle flèche sur la stabilité est négligeable par rapport aux amplitudes considérées.

Une telle inclinaison de pales permet également de diviser par deux la masse des contrepoids 801 nécessaires aux pales 2.

De tels avantages peuvent être sentis lorsque la composante d'inclinaison tangentielle β présente un angle compris entre -5 et -15°, en particulier lorsque la composante d'inclinaison vers l'amont α est comprise entre 0 et 2°.

L'axe de rotation de pale A₁ est typiquement incliné de manière fixe par rapport à l'axe radial A₂. La composante d'inclinaison vers l'amont ou vers l'aval α peut être fixe par rapport à l'axe radial A₂. En d'autres termes, l'inclinaison de chaque pale peut être fixée par rapport à l'axe radial A₂ de sorte à ne permettre, lors du fonctionnement de l'aubage, une rotation de la pale 2 que selon l'axe de rotation A₁ de pale 2, l'axe de rotation A₁ étant ainsi incliné tangentiellement et optionnellement vers l'amont ou vers l'aval de manière fixe par rapport à l'axe radial A₂. Ainsi, la pale 2 ne présente qu'un seul degré de liberté en rotation, celui selon l'axe de rotation A₁, aucune rotation selon les deux autres axes de rotations n'étant possible.

La composante d'inclinaison tangentielle β et/ou la composante d'inclinaison vers l'amont ou vers l'aval α, autrement dit l'angle d'inclinaison tangentielle et l'angle d'inclinaison vers l'amont ou vers l'aval sont par exemple déterminées au cours de la conception, et peuvent donc être figées par la construction de l'aubage.

Au cours du processus de conception, on détermine par exemple la combinaison de composante d'inclinaison vers l'amont α et de composante d'inclinaison tangentielle β pour satisfaire des objectifs aéro-acoustiques et mécaniques déterminés.

Cette combinaison de composante d'inclinaison vers l'amont α et de composante d'inclinaison tangentielle β, c'est-à-dire cette combinaison d'angles, est alors par exemple appliquée aux roulements 803. Le seul degré de liberté restant est alors l'angle de rotation de la pale autour de l'axe qui est défini par le roulement (et qui est piloté par la commande de changement de calage via l'arbre radial). Les angles α et β sont par exemple figés à la fabrication de l'anneau 802.Comme illustré à la figure 6, chaque arbre 6 de liaison peut être incliné par rapport à l'axe radial A₂, inclinant ainsi la pale correspondante selon l'inclinaison de pale voulue. Une telle mise en oeuvre est particulièrement adaptée pour les inclinaisons dont les composantes tangentielles et vers l'amont ou l'aval ne dépassent pas 5° en valeur absolue.

L'inclinaison de l'arbre 6 de liaison est par exemple une inclinaison fixe par rapport à l'axe radial A₂, typiquement une inclinaison comprenant une composante d'inclinaison vers l'amont ou vers l'aval α fixe par rapport à l'axe radial A₂.

Alternativement, ou en complément, chaque arbre 6 de liaison de rotor peut présenter une articulation inclinant la tête 602 de l'arbre de liaison par rapport au reste de l'arbre 6, et inclinant ainsi la pale 2 correspondante selon l'inclinaison de pale voulue.

L'articulation peut maintenir la tête 602 de l'arbre selon une inclinaison fixe par rapport à l'axe radial A₂, typiquement une inclinaison comprenant une composante tangentielle β et/ou la composante d'inclinaison vers l'amont ou vers l'aval α fixe par rapport à l'axe radial A₂.

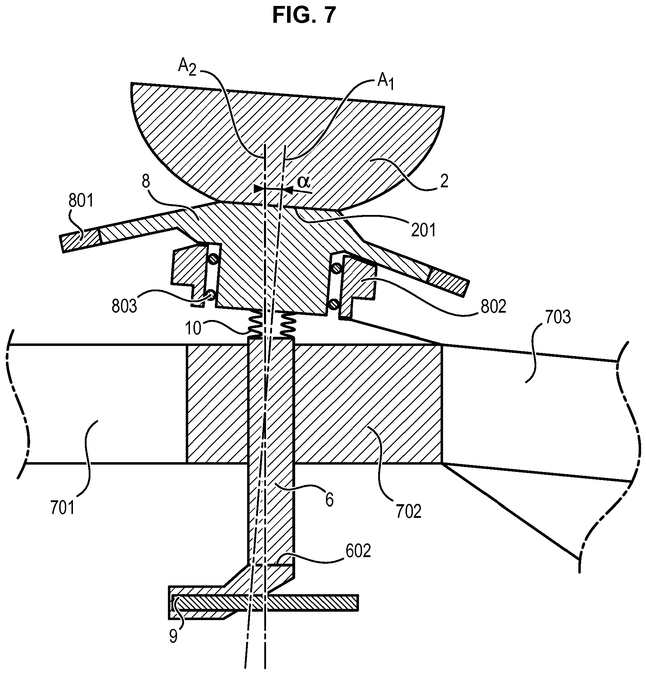

En référence à la figure 7, une telle articulation peut comprendre un soufflet 10, par exemple un soufflet métallique. Un tel soufflet 10 est adapté pour mettre en oeuvre une inclinaison de pales dont les composantes peuvent présenter des valeurs de plusieurs degrés.

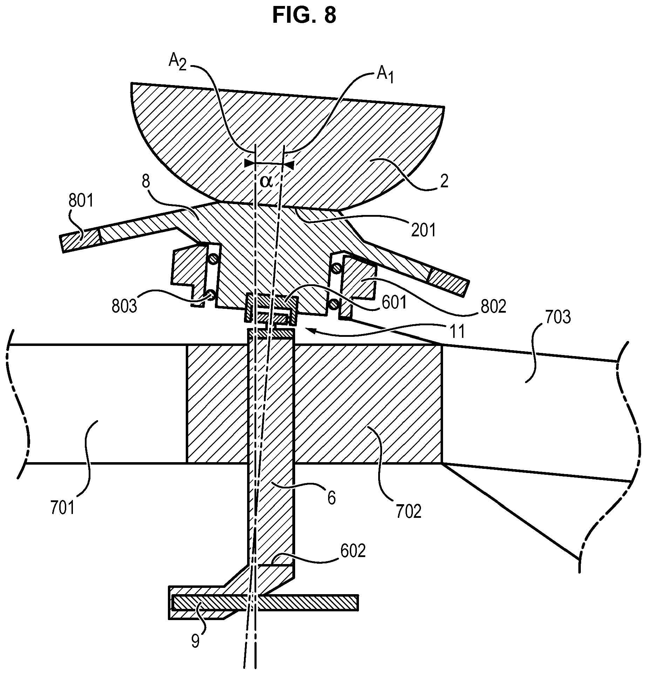

En référence à la figure 8, une telle articulation peut comprendre un joint de cardan 11. Un tel joint de cardan 11 est adapté pour mettre en oeuvre une inclinaison dont les composantes peuvent présenter des valeurs de plusieurs dizaines de degrés.

La turbomachine peut ainsi comprendre un tel aubage à calage variable. La turbomachine peut en particulier comprendre deux tels aubages à calage variable, les aubages étant par exemple des aubages contrarotatifs.

## Revendications

1. Aubage à calages variables comprenant :
- une pluralité de pales (2) d'hélice, chacune à calage variable selon un axe de rotation (A₁) de pale et chacune présentant un pied (201),
- une pluralité d'arbres (6) de liaison de rotor, chaque arbre (6) présentant un pied (602) et une tête (601), le pied (201) de chaque pale (2) étant monté sur la tête (601) d'un arbre (6) de liaison de rotor par l'intermédiaire d'un pivot (8) de manière à permettre la rotation de chaque pale (2) selon l'axe de rotation (A₁) de pale,
chaque pale (2) présentant une inclinaison de pale, telle que son axe de rotation (A₁) de pale est incliné par rapport à un axe radial (A₂) passant par le pied (602) de l'arbre (6) qui lui correspond, **caractérisé en ce que** l'inclinaison de pale comprend une composante d'inclinaison tangentielle (β) dans le plan de l'hélice, la composante d'inclinaison tangentielle étant fixe par rapport à l'axe radial, l'angle de l'inclinaison tangentielle étant vers l'extrados et compris entre 5 et 15°.

2. Aubage selon la revendication précédente, dans lequel l'angle de l'inclinaison tangentielle vers l'extrados est égal à 10°.

3. Aubage selon l'une quelconque des revendications 1 ou 2, **caractérisé en ce que** l'inclinaison de pale comprend une composante d'inclinaison vers l'amont ou l'aval par rapport au plan de l'hélice, la composante d'inclinaison vers l'amont ou l'aval étant fixe par rapport à l'axe radial, de sorte que la pale (2) ne présente qu'un seul degré de liberté en rotation, celui selon l'axe de rotation (A₁).

4. Aubage selon la revendication précédente, dans lequel la composante d'inclinaison vers l'amont ou l'aval est vers l'amont.

5. Aubage selon la revendication 4, **caractérisé en ce que** l'angle de l'inclinaison vers l'amont est compris entre 0 et 2°.

6. Aubage selon l'une quelconque des revendications 1 à 5, **caractérisé en ce que** chaque arbre (6) est incliné par rapport à l'axe radial (A₂), inclinant la pale (2) correspondante selon l'inclinaison de pale.

7. Aubage selon l'une quelconque des revendications 1 à 6, **caractérisé en ce que** chaque arbre (6) présente une articulation (10, 11) inclinant la tête (601) de l'arbre par rapport au reste de l'arbre, et inclinant ainsi la pale (2) correspondante selon l'inclinaison de pale.

8. Aubage selon la revendication 7, **caractérisé en ce que** l'articulation comprend un soufflet (10).

9. Aubage selon l'une quelconque des revendications 7 ou 8, **caractérisé en ce que** l'articulation comprend un joint de cardan (11).

10. Aubage selon l'une quelconque des revendications précédentes, dans lequel le pivot comprend des contrepoids (801).

11. Aubage selon la revendication précédente, dans lequel le rayon du centre de gravité d'au moins un contrepoids (801) varie en fonction du calage.

12. Turbomachine comprenant un aubage selon l'une quelconque des revendications 1 à 11.

13. Turbomachine comprenant deux aubages contrarotatifs, chacun selon l'une quelconque des revendications 1 à 11.

## Patentansprüche

1. Beschaufelung mit Blattverstellung, die Folgendes umfasst:
- eine Vielzahl von Schraubenblättern (2), jeweils mit einer Blattverstellung entlang einer Blattdrehachse (A₁), und die jeweils einen Fuß (201) aufweisen,
- eine Vielzahl von Rotorverbindungswellen (6), wobei jede Welle (6) einen Fuß (602) und einen Kopf (601) aufweist, wobei der Fuß (201) von jedem Blatt (2) derart über einen Wellenzapfen (8) an dem Kopf (601) einer Rotorverbindungswelle (6) gelagert ist, dass die Drehung jedes Blattes (2) entlang der Blattdrehachse (A₁) erlaubt wird,
wobei jedes Blatt (2) eine Blattneigung aufweist, derart dass seine Blattdrehachse (A₁) in Bezug auf eine radiale Achse (A₂) geneigt ist, die über den Fuß (602) der Welle (6), die ihm entspricht, verläuft, **dadurch gekennzeichnet, dass** die Blattneigung eine tangentiale Neigungskomponente (β) in der Schraubenebene umfasst, wobei die tangentiale Neigungskomponente in Bezug auf die radiale Achse fest ist, wobei der tangentiale Neigungswinkel hin zur Saugseite gerichtet ist und zwischen 5 und 15° beträgt.

2. Beschaufelung nach dem vorhergehenden Anspruch, wobei der tangentiale Neigungswinkel hin zur Saugseite gleich 10° ist.

3. Beschaufelung nach einem der Ansprüche 1 oder 2, **dadurch gekennzeichnet, dass** die Blattneigung eine Neigungskomponente hin zur stromaufwärtigen oder stromabwärtigen Seite in Bezug auf die Schraubenebene umfasst, wobei die Neigungskomponente hin zur stromaufwärtigen oder stromabwärtigen Seite in Bezug auf die radiale Achse fest ist, derart dass das Blatt (2) lediglich einen einzigen Drehfreiheitsgrad, denjenigen entlang der Drehachse (A₁), umfasst.

4. Beschaufelung nach dem vorhergehenden Anspruch, wobei die Neigungskomponente hin zur stromaufwärtigen oder stromabwärtigen Seite hin zur stromaufwärtigen Seite gerichtet ist.

5. Beschaufelung nach Anspruch 4, **dadurch gekennzeichnet, dass** der Neigungswinkel hin zur stromaufwärtigen Seite zwischen 0 und 2° beträgt.

6. Beschaufelung nach einem der Ansprüche 1 bis 5, **dadurch gekennzeichnet, dass** jede Welle (6) in Bezug auf die radiale Achse (A₂) geneigt ist, wodurch das entsprechende Blatt (2) entlang der Blattneigung geneigt ist.

7. Beschaufelung nach einem der Ansprüche 1 bis 6, **dadurch gekennzeichnet, dass** jede Welle (6) ein Gelenk (10, 11) aufweist, das den Kopf (601) der Welle in Bezug auf den Rest der Welle neigt und somit das entsprechende Blatt (2) entlang der Blattneigung neigt.

8. Beschaufelung nach Anspruch 7, **dadurch gekennzeichnet, dass** das Gelenk einen Balg (10) umfasst.

9. Beschaufelung nach einem der Ansprüche 7 oder 8, **dadurch gekennzeichnet, dass** das Gelenk ein Kreuzgelenk (11) umfasst.

10. Beschaufelung nach einem der vorhergehenden Ansprüche, wobei der Wellenzapfen Gegengewichte (801) umfasst.

11. Beschaufelung nach dem vorhergehenden Anspruch, wobei der Radius des Schwerpunkts von mindestens einem Gegengewicht (801) sich in Abhängigkeit von der Verstellung ändert.

12. Turbomaschine, die eine Beschaufelung nach einem der Ansprüche 1 bis 11 umfasst.

13. Turbomaschine, die zwei gegenläufige Beschaufelungen jeweils nach einem der Ansprüche 1 bis 11 umfasst.

## Claims

1. Variable-pitch blading including:
- a plurality of propeller blades (2), each with variable pitch about a blade axis of rotation (A₁) and each having a root (201),
- a plurality of rotor connecting shafts (6), each shaft (6) having a root (602) and a head (601), the root (201) of each blade (2) being assembled on the head (601) of a rotor connecting shaft (6) via a pivot (8) so as to allow rotation of each blade (2) about the blade axis of rotation (A₁),
each blade (2) having a blade inclination, such that its blade axis of rotation (A₁) is inclined with respect to a radial axis (A₂) running through the root (602) of the corresponding shaft (6), **characterized in that** the blade inclination comprises a tangential inclination component (β) in the plane of the propeller, the tangential inclination component being fixed with respect to the radial axis, the angle of the tangential inclination being towards the extrados and between 5 and 15°.

2. Blading according to the preceding claim, wherein the angle of the tangential inclination towards the extrados is equal to 10°.

3. Blading according to any one of claims 1 or 2, **characterized in that** the blade inclination comprises an upstream or downstream inclination component with respect to the plane of the propeller, the upstream or downstream inclination component being fixed with respect to the radial axis, so that the blade (2) has only one degree of freedom in rotation, that about the axis of rotation (A₁).

4. Blading according to the preceding claim, wherein the upstream or downstream inclination component is upstream.

5. Blading according to claim 4, **characterized in that** the angle of the upstream inclination is between 0 and 2°.

6. Blading according to any one of claims 1 to 5, **characterized in that** each shaft (6) is inclined with respect to the radial axis (A₂), inclining the corresponding blade (2) by the blade inclination.

7. Blading according to any one of claims 1 to 6, **characterized in that** each shaft (6) has a joint (10, 11) inclining the head (601) of the shaft relative to the rest of the shaft, and thus inclining the corresponding blade (2) by the blade inclination.

8. Blading according to claim 7, **characterized in that** the joint comprises a bellows (10).

9. Blading according to any one of claims 7 or 8, **characterized in that** the joint comprises a universal joint (11).

10. Blading according to any one of the preceding claims, wherein the pivot comprises counterweights (801).

11. Blading according to the preceding claim, wherein the radius of the center of gravity of at least one counterweight (801) varies as a function of the pitch.

12. Turbomachine comprising a blading according to any one of claims 1 to 11.

13. Turbomachine comprising two counter-rotating bladings, each according to any one of claims 1 to 11.
